# EUROPEAN PATENT APPLICATION

(11) **EP 3 719 331 A1**
(43) Date of publication of application: **07.10.2020**
(21) Application number: 20166159.2
(22) Date of filing: 27.03.2020
(51) Int. Cl.: F16B 39/00, A61C 8/00

(54) **ANTI-LOOSENING FASTENING SYSTEM**

(30) Priority: 05.04.2019 IT 201900005198
(71) Applicant: Physioplant S.r.l., 25030 Roncedelle, Brescia (IT)
(72) Inventor: RIZZO, Rosario, 25030 Roncadelle, Brescia (IT); FRASSINE, Matteo, 25030 Roncadelle, Brescia (IT)
(74) Representative: Biesse S.r.l.

(57) **Abstract**

The present invention concerns an anti-loosening fastening system (1) comprising: a screw (2) with a head (5), an underhead surface (6) and a shank (7) having a longitudinal rotation axis (X); an element to be fastened (3) having a hole (8) intended to be engaged by the shank (7), and a leaning surface (9) surrounding the hole (8), wherein the hole (8) is coaxial with the longitudinal rotation axis (X) of the shank (7) when the shank (7) engages the hole (8); and an annular element (4) intended to be interposed between the underhead surface (6) and the leaning surface (9); wherein the underhead surface (6) comprises a plurality of first grooves (10), the leaning surface (9) comprises a plurality of second grooves (11), and wherein the annular element (4) is of a plastic material.

## Description

### Field of the invention

In its most general aspect, the present invention refers to an anti-loosening fastening system and, in particular, the invention concerns a fastening system of the aforesaid type able to provide, in the healthcare field and more specifically in the dental field, a so-named elastic and reversible connection.

### State of the art

As is known in the mechanics of screwed structures, the art provides different solutions to provide a high stability of the junction between two parts screwed to one another.

The stability of the junction between two parts or portions screwed to one another, thus the strength of one or more screws, can be, among other things, seriously compromised whenever the respective structure comprising the screwed parts is subjected to dynamic stimuli, vibrations or other stresses, as in the case of prosthetic structures, such as for example in dental implants.

Generally, it is possible to rely, for example, on a tightening with forces up to the breaking limit in order to prevent the loosening of a screw.

Another way to prevent the loosening of a screw is to resort to the use of the so-named threadlockers, which consist of liquid chemical compounds, for example cyanoacrylates, to be applied directly on the parts concerned with the screwing and which harden after having been applied, thus locking the thread of the screw and thus eliminating loosening due to vibrations, shocks and sudden temperature changes. This system is however irreversible.

In order to prevent the loosening of a screw, it is also possible to resort to the use of devices to be interposed between the screw itself, in particular between the underhead of the screw, and a leaning plane of the part or portion to be screwed, of the washer type for example.

In this regard, it should be mentioned that there are different types of washers, for example flat washers possibly toothed internally or externally, thus consisting of a small metal disc with a central hole, so-named Grover washers with a cylindrical helix shape, so-named waver washers and conical washers, just to name a few.

Although advantageous, the solutions described above are not devoid of drawbacks, among which the main one lies in the rigidity of the coupling between the screwed parts.

In fact, there are cases wherein two parts screwed to one another have to preserve a given degree, although minimum, of mobility to achieve a so-named elastic connection.

Sometimes, in addition to being elastic, the connection between the parts screwed to one another has also to be reversible.

In such cases, it is thus necessary for a screw to preserve the possibility of being removed, without however accidentally unscrewing or loosening.

### Summary of the Invention

The technical problem underlying the present invention was to provide a fastening system for screw-coupling two elements or portions of a screwed structure, having structural and functional characteristics so that to overcome one or more of the aforesaid drawbacks with reference to the known art.

According to the invention, the aforesaid problem is solved by an anti-loosening fastening system comprising:
a screw with a head, an underhead surface and a shank having a longitudinal rotation axis,
an element to be fastened, having a hole intended to be engaged by the aforesaid shank, and a leaning surface surrounding the aforesaid hole, wherein the aforesaid hole is coaxial with the aforesaid shank when the aforesaid shank engages the aforesaid hole, and
an annular element intended to be interposed between the aforesaid underhead surface and the aforesaid leaning surface,
characterized in that
the aforesaid underhead surface comprises a plurality of first grooves, the aforesaid leaning surface comprises a plurality of second grooves,
and in that
the aforesaid annular element is of a plastic material.

In practice, according to the invention, in the present fastening system, the annular element is compressed between the underhead surface of the screw and the leaning surface of the element to be fastened while tightening the screw, thus adapting itself to the first grooves on one side and to the second grooves on the other side, thus significantly reducing the possibility of an accidental unscrewing of the screw, thus achieving a connection with a given degree of elasticity which allows the screw and the element to be fastened, once fastened, to have a given "mobility" and thus achieving a reversible connection with allows the screw itself to be unscrewed if a sufficient force is used.

Preferably, the aforesaid plastic material is a thermoplastic polymer possibly suitably additivated and more preferably the aforesaid plastic material is selected from the group comprising acetal resins (POM - Polyoxymethylene) and polyketones including PEEKs (Polyether ether ketone).

Preferably, each first groove of the aforesaid plurality of first grooves is delimited by a first wall extending from a first corner proximal to the aforesaid shank of the screw to a vertex distal from the aforesaid shank of the screw.

Preferably, when the aforesaid screw is placed above the aforesaid element to be fastened, in the aforesaid first wall of an aforesaid first groove, proceeding clockwise, the aforesaid first corner precedes the aforesaid vertex.

Preferably, each aforesaid first groove is delimited by a second wall extending from a second corner passing via the aforesaid vertex towards the aforesaid first corner, wherein more preferably the aforesaid second corner is substantially parallel to the aforesaid longitudinal rotation axis of the aforesaid shank.

Preferably, the first grooves of the aforesaid plurality of first grooves are spaced from each other, between two aforesaid first consecutive grooves, a length of underhead surface devoid of first grooves being included.

Preferably, the aforesaid first grooves are four in number.

Preferably, each second groove of the aforesaid plurality of second grooves is delimited by a first wall tilted by an angle different than 90° with respect to the axis of the aforesaid hole.

Preferably, when the aforesaid screw is placed above the aforesaid element to be fastened, proceeding clockwise, the aforesaid first wall of a respective second groove has ascending evolution.

Preferably, each second groove of the aforesaid plurality of second grooves is delimited by a second wall substantially parallel to the axis of the aforesaid hole.

Preferably, the second grooves of the aforesaid plurality of second grooves are at least partly adjacent to each other.

Preferably, the aforesaid second grooves are four in number.

Preferably, the aforesaid first grooves and the aforesaid second grooves are obtained by milling.

Preferably, the aforesaid element to be fastened, which in practice corresponds to a first element or portion of the screwed structure, is a prosthetic component, more preferably a prosthetic component for an intraosseous dental implant, still more preferably a prosthetic component of the aforesaid type selected from the group comprising caps, cores, temporary abutments, permanent abutments and the like.

### Brief description of the figures

Further characteristics and advantages of the invention will be better highlighted considering the following detailed description of a preferred, but not exclusive, embodiment illustrated by way of example, and without limitations, with the aid of the accompanying drawings, in which:

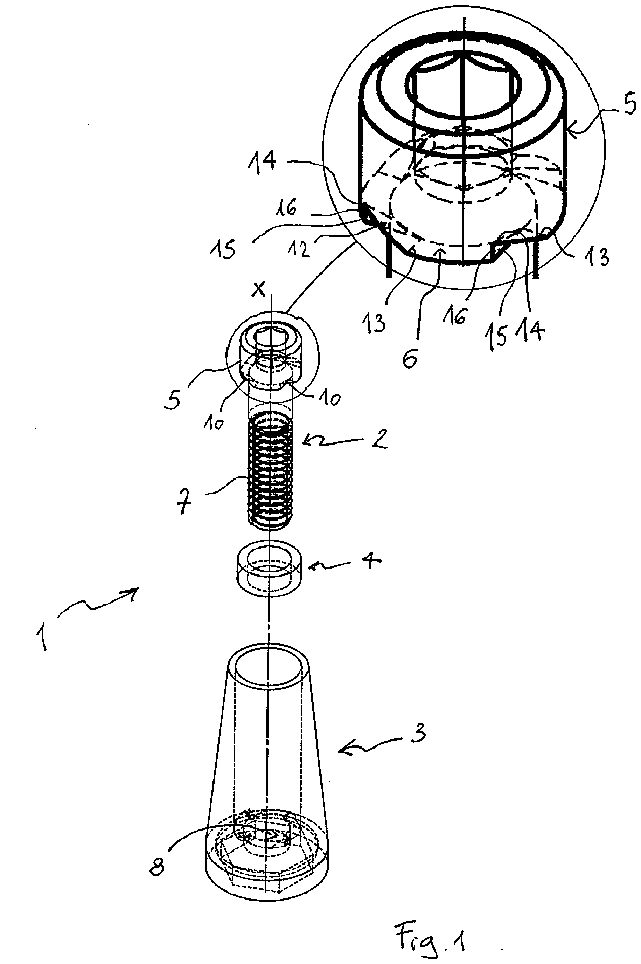

- figure 1 shows a transparent top perspective view of separate parts of an anti-loosening fastening system comprising a screw, an element to be fastened via the aforesaid screw and an annular element intended to be interposed between the aforesaid screw and the aforesaid element to be fastened, with a respective enlarged particular, according to the present invention;

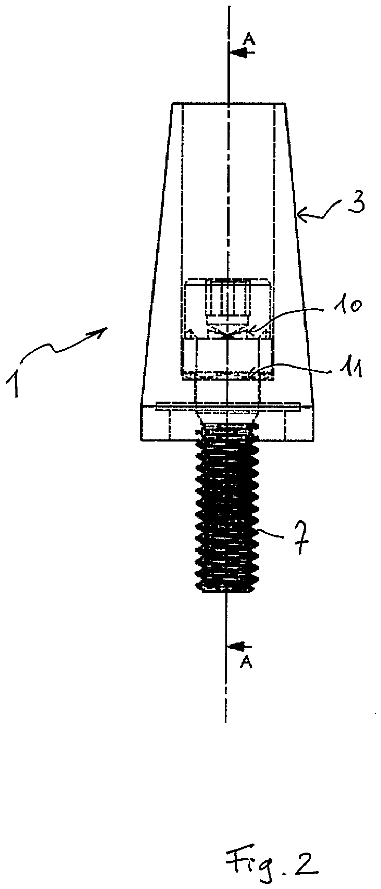

- figure 2 shows a transparent side view of the system of figure 1, with the aforesaid screw coupled to the aforesaid element to be fastened with the interposition of the aforesaid annular element, according to the present invention;

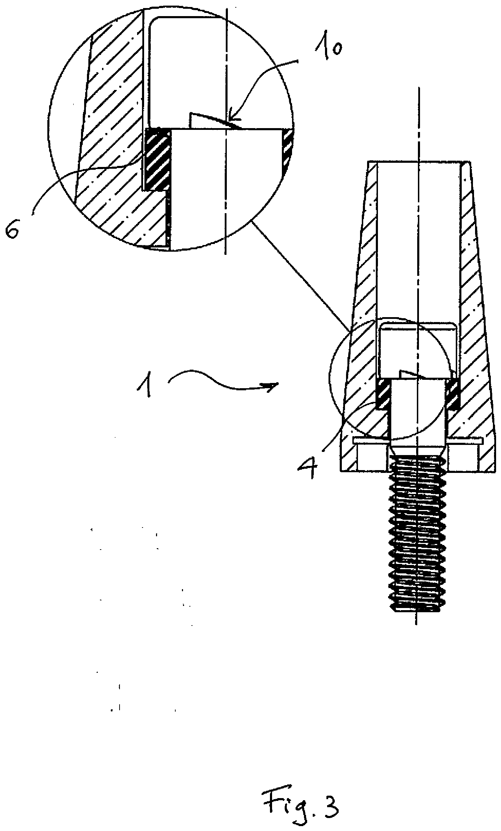

- figure 3 shows a longitudinal section of the fastening system according to the present invention shown according to the arrows A-A of figure 2, with a respective enlarged particular;

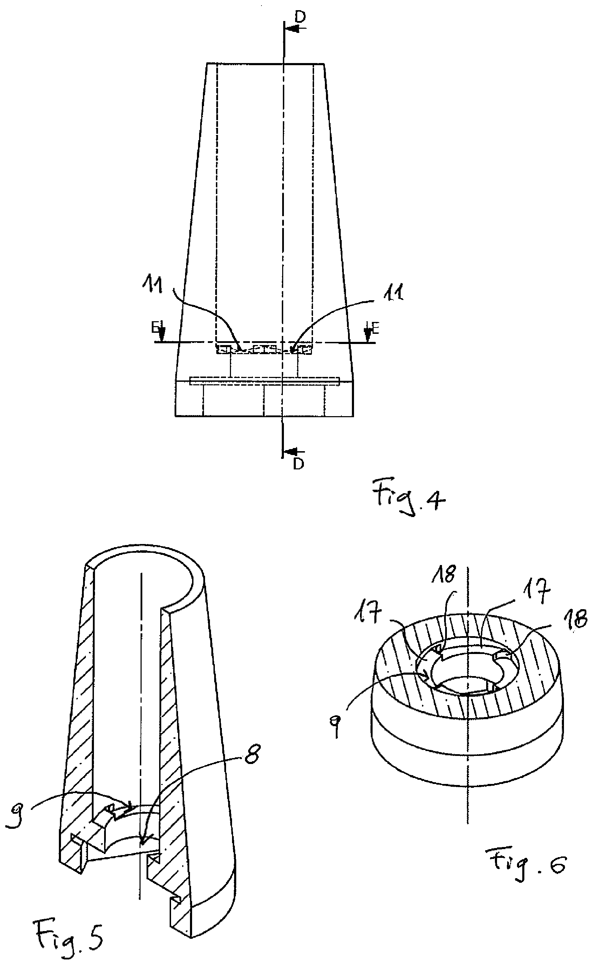

- figure 4 shows a transparent side view of the element to be fastened of the fastening system of figure 1;
- figure 5 shows a perspective of a longitudinal section according to the arrows D-D of figure 4 of the element to be fastened of the fastening system of figure 1;
- figure 6 shows a perspective of cross section according to the arrows E-E of figure 4 of the element to be fastened of the fastening system of figure 1.

### Detailed description of the invention

With reference to the aforesaid figures, **1** generally denotes an anti-loosening fastening system according to the present invention.

In practice, the anti-loosing fastening system **1** allows to couple two elements or portions of a screwed structure by screwing and is herein described as a non limiting example with reference to the field of intraosseous dental implants, the possibility of making an anti-loosening fastening system according to the present invention in other sectors related to prosthetic devices and more generally to the healthcare field not however being excluded.

The anti-loosening fastening system **1** essentially comprises a screw **2**, an element to be fastened **3** intended to be constrained through the screw **2**, and an annular element **4** intended to be interposed between the screw **2** and the element to be fastened **3.**

According to the above and to the examples of the figures, the element to be fastened **3** (first element) is a cap of a prosthetic device for intraosseous dental implants, which is intended to be constrained to an intraosseous support which, in practice, constitutes a second element of the two elements or two portions of the aforesaid screwed structure and which is not shown in the examples of the figures, the possibility of providing an element to be fastened of the aforesaid type, for example in the shape of a core, temporary abutment, permanent abutment or the like, not however being excluded.

In particular, the screw **2** comprises a head **5**, an underhead surface **6** and a stem or shank **7** having a longitudinal rotation axis **X.**

The element to be fastened **3** is provided with a hole **8** intended to be engaged by the shank **7** of the screw **2** and comprises a leaning surface **9** surrounding the hole **8.**

In detail, the hole **8** is coaxial with the shank **7** when the shank **7** engages the hole 8, i.e. they have a common axis equivalent to the longitudinal rotation axis **X** of the shank **7.**

Similarly, the annular element **4**, which in practice comprises a body provided with a through hole made of a plastic material with sufficient resistance against breakage that can be of the ring or o-ring type, when is interposed between the underhead surface **6** and the leaning surface **9** is coaxial with the hole **8** and the shank **7.**

Preferred plastic materials for the aforesaid annular element comprise thermoplastic polymers possibly suitably additivated and, preferably, the aforesaid plastic material is selected from the group comprising acetal resins (POM - Polyoxymethylene) and polyketones including PEEKs (Polyether ether ketone).

According to the invention, the underhead surface **6** comprises a plurality of first grooves, each denoted by **10**, and the leaning surface **9** comprises a plurality of second grooves, each denoted by **11.**

The first grooves **10** and the second grooves **11** are in practice notches that are advantageously obtained on the respective surfaces by milling.

Therefore, in the present fastening system, the annular element **4** is compressed between the underhead surface **6** of the screw **2** and the leaning surface **9** of the element to be fastened **3** while tightening the screw **2**, thus adapting itself to the first grooves **10** on one side and to the second grooves **11** on the other side, thus significantly reducing the possibility of an accidental unscrewing or loosing of the screw, thus achieving a connection with a given degree of elasticity which allows the screw to have a given "mobility" and thus achieving a reversible connection which allows the screw itself to be unscrewed if a sufficient force is used.

According to the examples of the figures, each first groove **10** is delimited by a first wall **12** extending from a first corner **13** proximal to the shank **7** of the screw **2** to a vertex **14** distal from the shank **7** of the screw **2.**

Moreover, each first groove **10** is delimited by a second wall **15** extending from a second corner **16** passing via the vertex **14** towards the first corner **13.**

Moreover, advantageously, when the screw **2** is placed above the element to be fastened **3**, in the first wall **12** of a first groove **10**, proceeding clockwise, the first corner **13** precedes the vertex **14.**

In other words, the first grooves are preferably, so to speak, oriented in a direction such as to not oppose while screwing the screw, in particular, according to the examples of the figures, they are oriented in a counterclockwise direction so that the aforesaid second corner does not oppose while screwing the screw and prevents the unscrewing of the screw in a counterclockwise direction.

Still according to the examples of the figures, it should be said that the second corner **16** of the second wall **15** of a first groove **10** is substantially parallel to the longitudinal rotation axis **X** of the shank **7**, thus achieving a so-named sharp corner, the possibility of providing a second corner not parallel to the aforesaid longitudinal rotation axis not however being excluded.

As far as the first grooves **10** are still concerned, it should be added that they are preferably spaced from each other, meaning that a length of underhead surface **6** devoid of first grooves is included between two first consecutive grooves **10.**

According to the examples of the figures, it should be added that the first grooves **10** are four in number, the possibility of providing a different number of first grooves not however being excluded.

As far as the second grooves **11** are concerned, it should be said that, according to the examples of the figures, each of them is delimited by a first wall **17** tilted by an angle different than 90° with respect to the axis of the aforesaid hole.

In particular, preferably, when the screw **2** is placed above the element to be fastened **3**, proceeding clockwise, the first wall **17** of a respective second groove **11** has ascending evolution.

In other words, the second grooves are oriented in a direction opposite that of the first grooves, i.e. counterclockwise according to the examples of the figures.

Moreover, each second groove **11** is delimited by a second wall **18** substantially parallel to the axis of the hole **8**, thus achieving a so-named sharp corner also in this case, the possibility of providing a second wall of the second grooves not parallel with the axis of the hole **8** not however being excluded.

As far as the second grooves **11** are still concerned, it should be added that they are preferably at least partly adjacent to each other, meaning that at least one portion of a corner of a second wall **18** of a given second groove **11** is shared with at least one portion of a corner of a first wall **17** of a second groove **11** that precedes the aforesaid given second groove **11.**

According to the examples of the figures, it should be added that the second grooves **11** are four in number, the possibility of providing a different number of second grooves not however being excluded.

The advantages of the present invention, made clear in the description set forth above, can be summarized by remarking that a fastening system for combining two elements or portions of a screwed structure and which achieves a particularly effective connection, wherein the possibility of being unscrewed is significantly reduced and provided with a given degree of elasticity, thus of mobility between the parts screwed to each other, and also substantially reversible is made available.

A technician of the field will be able to carry out numerous variations and modifications to the present invention in the embodiments shown and described, in order to satisfy contingent and specific needs, all however included with the scope of protection of the invention as defined in the following claims.

## Claims

1. Anti-loosening fastening system (1) comprising:
a screw (2) with a head (5), an underhead surface (6) and a shank (7) having a longitudinal rotation axis (X),
an element to be fastened (3) having a hole (8) intended to be engaged by said shank (7), and a leaning surface (9) surrounding said hole (8), wherein said hole (8) is coaxial with said shank (7) when said shank (7) engages said hole (8), and
an annular element (4) intended to be interposed between said underhead surface (6) and said leaning surface (9),
**characterized in that**
said underhead surface (6) comprises a plurality of first grooves (10), said leaning surface comprises a plurality of second grooves (11),
and **in that**
said annular element (4) is of a plastic material.

2. System according to claim 1, wherein each first groove (10) of said plurality of first grooves is delimited by a first wall (12) extending from a first corner (13) proximal to said shank (7) to a vertex (14) distal from said shank (7).

3. System according to claim 2 wherein, when said screw (2) is placed above said element to be fastened (3), in said first wall (12) of said first groove (10), proceeding clockwise, said first corner (13) precedes said vertex (14).

4. System according to claim 2 or 3, wherein each first groove (10) of said plurality of first grooves is delimited by a second wall (15) extending from a second corner (16) passing via said vertex (14) towards said first corner (13), wherein preferably said second corner (16) is substantially parallel to said longitudinal rotation axis (X) of said shank (7).

5. System according to any one of the preceding claims, wherein the first grooves (10) of said plurality of first grooves are spaced from each other, between two consecutive first grooves (10) a length of underhead surface (6) devoid of first grooves being included.

6. System according to any one of the preceding claims, wherein each second groove (11) of said plurality of second grooves is delimited by a first wall (17) tilted by an angle different than 90° with respect to the axis of said hole.

7. System according to claim 6 wherein, when said screw (2) is placed above said element to be fastened (3), proceeding clockwise, said first wall (17) of a respective second groove (11) has ascending evolution.

8. System according to any one of the preceding claims, wherein each second groove (11) of said plurality of second grooves is delimited by a second wall (18) substantially parallel to the axis of said hole (8).

9. System according to any one of the preceding claims, wherein the second grooves (11) of said plurality of second grooves are at least partly adjacent to each other.

10. System according to any one of the preceding claims, wherein said element to be fastened (3) is a prosthetic component, preferably a prosthetic component for an intraosseous dental implant, more preferably a prosthetic component selected from the group comprising caps, cores, temporary abutments, permanent abutments and the like.

11. System according to any one of the preceding claims, wherein said plastic material is a thermoplastic polymer possibly suitably additivated, preferably wherein said plastic material is selected from the group comprising acetal resins (POM - Polyoxymethylene) and polyketones including PEEKs (Polyether ether ketone).
